# FASCICULE DE BREVET EUROPEEN

(11) **EP 3 544 829 B1**
(45) Date de publication et mention de la délivrance du brevet: **30.06.2021**
(21) Numéro de dépôt: 17812015.0
(22) Date de dépôt: 22.11.2017
(51) Int. Cl.: B60C 11/03

(54) **BANDE DE ROULEMENT DE PNEU POUR ENGIN DE GÉNIE CIVIL COMPORTANT DES CREUX DE VENTILATION AMÉLIORÉS**
LAUFFLÄCHE FÜR TIEFBAUMASCHINENREIFEN MIT VERBESSERTEN VENTILATIONSHOHLRÄUMEN
TREAD FOR CIVIL ENGINEERING MACHINE TYRE COMPRISING IMPROVED VENTILATION CAVITIES

(30) Priorité: 22.11.2016 FR 1661350
(43) Date de publication de la demande: 02.10.2019
(73) Titulaire: Compagnie Générale des Etablissements Michelin, 63000 Clermont-Ferrand (FR)
(72) Inventeur: SPINNLER, Olivier, 63040 Clermont-Ferrand Cedex 9 (FR)
(74) Mandataire: Millanvois, Patrick Jacques Jean
(86) Numéro de dépôt international: PCT/FR2017/053199
(87) Numéro de publication internationale: WO 2018/096259

(56) Documents cités:
- WO-A1-2015/140122
- JP-A- 2010 247 707
- JP-A- 2010 247 714
- JP-A- 2012 171 505
- US-A1- 2014 299 242

## Description

### DOMAINE DE L'INVENTION

L'invention concerne un pneu pour véhicule de génie civil ou hors la route ("*off-the-road"* en anglais) dont la bande de roulement est épaisse et a une épaisseur au moins égale à 60 mm. L'invention concerne plus particulièrement une nouvelle géométrie d'un moyen de ventilation thermique de ce type de bande de roulement afin de réduire la température dans la bande de roulement en fonctionnement.

### ÉTAT DE LA TECHNIQUE

L'exploitation des mines nécessite le recours à l'emploi de véhicules adaptés pouvant notamment porter de très lourdes charges de matériaux traités dans ces mines en parcourant de plus ou moins grandes distances sur des sols à plus ou moins forte déclivité et très souvent recouverts de corps ou objets pouvant altérer les performances d'adhérence des véhicules que ce soit en motricité ou en freinage ou encore des performances en suivi de trajectoire. Ces véhicules de grande capacité de charge en matériaux sont équipés de pneus de dimensions appropriées pour permettre le déplacement de très grandes quantités de matériaux. Ces pneus sont de dimensions très importantes comparativement aux autres catégories de pneus et notamment bien supérieures à celles des pneus destinés à des véhicules poids lourd.

De façon usuelle, un pneu, destiné à équiper un véhicule de génie civil ou d'usage hors la route, est pourvu d'une bande de roulement surmontant radialement vers l'extérieur une armature de sommet elle-même surmontant une armature de carcasse. Cette bande de roulement comporte une sculpture formée par des éléments de relief (nervures ou blocs), ces éléments de relief étant délimités par une pluralité de découpures (rainures, incisions, cavités). En outre, la bande a une épaisseur qui est au moins égale à 60 mm et peut aller jusqu'à au moins 125 mm pour certaines applications ; cette épaisseur est déterminée comme étant la plus grande des profondeurs des rainures à l'état neuf. Cette profondeur correspond à la hauteur de matière de la bande de roulement à user en roulage.

Les éléments de relief de la bande de roulement d'un pneu comportent des faces de contact radialement à l'extérieur de la bande de roulement, ces faces de contact, formant la surface de roulement de la bande de roulement, étant prévues pour venir en contact avec le sol lors du roulage et assurer la transmission de tous les efforts entre le sol et le pneu. Les découpures ont des profondeurs au plus égales à l'épaisseur de la bande et ont des géométries, vues en section, qui sont appropriées pour limiter la rétention de cailloux et autres objets présents sur le sol.

Ce type de bande de roulement présente des parties épaules bordant axialement de chaque côté ladite bande de roulement. Ces parties épaules peuvent être continues pour former des nervures ou bien pourvues de rainures transversales ou obliques pour former une pluralité de blocs.

La forte épaisseur de la bande de roulement associée aux sollicitations supportées dans la zone de contact avec le sol génèrent des échauffements pouvant être la cause d'endommagements prématurés conduisant au retrait du pneu ; ces échauffements au sein même de la matière sont en lien avec les caractéristiques d'hystérèses des matériaux caoutchoutiques constituant cette bande.

Il est connu - voir notamment les documents WO 2015/140122 A1, EP 2655093 A1, JPH10278510 A - de former dans les éléments de relief, pouvant être soit des nervures soit des blocs, des cavités dont une de leurs fonctions est de créer une ventilation pour évacuer des calories générées lors du roulage. La profondeur et le volume de ces cavités sont choisis en relation avec le besoin de réduction du niveau thermique. Ces cavités sont en règle générale ouvertes soit latéralement à la bande de roulement soit sur la surface de roulement de la bande de roulement c'est-à-dire sur la surface de la bande venant en contact avec le sol. L'effet recherché est un effet de ventilation conduisant à une limitation de la température dans l'intérieur de la bande de roulement et cela au plus près des armatures de renforcement de sommet. Dans ce but, la profondeur des cavités est appropriée pour être en rapport avec l'épaisseur de la bande de roulement et les extrémités des armatures de sommet. D'autres documents tels JP 2010-247707, JP 2012-171505 montrent des pneus ont les bandes de roulement sont pourvues de cavités sur leurs bords.

Bien entendu, pour être efficaces, ces cavités de ventilation doivent être de dimensions relativement importantes à la fois dans l'épaisseur de la bande et sur la surface de roulement afin de créer une surface d'échange thermique suffisante et ainsi favoriser une bonne ventilation par l'air ambiant.

Cette profondeur de cavité est comme cela est indiqué dans la demande publiée sous le numéro WO 2015/140122 A1 au moins égale à 30% et encore plus préférentiellement au moins égale à 50% de la hauteur totale de matière à user.

Le respect de ces conditions peut conduire à des cavités profondes ouvertes sur la surface de roulement et favorisant certes le refroidissement mais pouvant lors du roulage occasionner des captures de corps ou objets étrangers présents sur le sol sur lequel roule le pneu. Ces corps captés dans une cavité peuvent être éjectés s'ils sont de dimensions petites par rapport aux dimensions de la section d'ouverture de la cavité ou bien retenus captifs dans la cavité du fait de la nature élastique déformable du matériau formant la bande de roulement lequel matériau peut exercer des efforts de retenue sur les corps étrangers se trouvant dans la cavité.

Dans ce dernier cas, le corps étranger peut rester coincé dans la cavité et, par des mouvements de reptation se produisant à chaque tour de roue, s'enfoncer dans le matériau de la bande de roulement jusqu'à pouvoir le cas échéant agresser le fond de la cavité puis potentiellement l'armature de renforcement du pneu située radialement à l'intérieur de la bande de roulement.

Après avoir constaté cet inconvénient, les demanderesses se sont fixées pour objectif d'optimiser la géométrie de cavités de ventilation destinées à favoriser les échanges thermiques entre les parties massives de la bande de roulement et l'air environnant tout en réduisant les risques d'agression par des corps étrangers susceptibles d'entrer dans ces cavités et d'y rester captifs.

### Définitions :

Par direction radiale, on entend dans le présent document toute direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Plan médian équatorial : c'est un plan perpendiculaire à l'axe de rotation et passant par les points du pneu radialement les plus éloignés dudit axe. Pour une bande de roulement ce plan divise la bande dans sa largeur en deux moitiés d'égales largeurs.

Une nervure est un élément en relief formé dans une bande de roulement, cet élément de relief s'étendant dans la direction circonférentielle et faisant le tour du pneu. Une nervure comprend deux parois latérales et une face de contact, cette dernière face pouvant venir en contact avec la chaussée pendant le roulage.

Un bloc est un élément de relief formé dans une bande de roulement, cet élément de relief étant délimité par des rainures orientées circonférentiellement ou sensiblement circonférentiellement et des rainures orientées transversalement ou sensiblement transversalement (ces dernières rainures peuvent être orientées obliquement). Un bloc comprend plus de deux parois latérales et une face de contact pouvant venir en contact avec la chaussée pendant le roulage.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent pas venir en contact l'une contre l'autre même partiellement dans les conditions usuelles de roulage.

Une cavité de ventilation est un creux formé notamment par moulage à l'intérieur d'une nervure ou d'un bloc d'une bande de roulement. Cette cavité de ventilation a un volume de creux à neuf et s'ouvre sur la face de contact de la nervure ou du bloc à neuf, cette face de contact étant destinée à venir en contact avec le sol sur lequel roule le pneu. La cavité de ventilation est délimitée par au moins une paroi dont l'intersection avec la face de contact de l'élément en relief forme une arête ayant un contour fermé ou par une pluralité d'arêtes formant un contour fermé.

### BREF EXPOSE DE L'INVENTION

La présente invention propose un pneu de véhicule de travaux de génie civil, ce véhicule étant destiné à porter de très lourdes charges, ce pneu comprenant une armature de carcasse surmontée radialement à l'extérieur par une armature de sommet, laquelle armature de sommet est recouverte par une bande de roulement.

La bande de roulement de ce pneu a une surface de roulement s'étendant circonférentiellement tout autour du pneu ; la bande est limitée axialement par des parties de bord définissant une largeur maximale.

Cette bande de roulement a une épaisseur de matière à user au moins égale à 60 mm ; cette épaisseur correspond à l'épaisseur de matière mesurée entre la surface de roulement destinée à venir en contact avec un sol à neuf et une limite d'usure préalablement fixée.

Cette bande de roulement est pourvue de découpures délimitant des parties de matière formant des éléments de relief qui peuvent être soit des nervures soit des blocs, chaque élément de relief comprenant une face de contact, l'ensemble des faces de contact de tous les éléments de relief formant la surface de roulement de la bande de roulement destinée à venir en contact avec le sol sur lequel roule le pneu pourvu de cette bande.

Sur une pluralité d'éléments de relief, il est formé au moins une cavité de ventilation. Chaque cavité de ventilation s'ouvre à l'état neuf sur la face de contact d'un élément de relief. Chaque cavité est délimitée par au moins une surface de paroi, cette au moins une surface de paroi se terminant par une surface de fond dont la distance maximale à la surface de roulement à neuf correspond à au moins 70 % de l'épaisseur de matière à user de la bande de roulement.

La surface de paroi d'une cavité de ventilation coupe la surface de roulement selon au moins une arête dont le contour géométrique est fermé. La surface de paroi de chaque cavité de ventilation peut être formée par une surface unique, par exemple une surface conique ou par plusieurs surfaces. Cette surface de paroi peut être considérée comme formée par la réunion d'une pluralité de génératrices s'étendant dans la direction de la profondeur de la cavité de ventilation, ces génératrices étant organisées autour d'un axe de la cavité de ventilation, cet axe s'étendant dans la direction de la profondeur de ladite cavité.

La bande de roulement selon l'invention est telle que chaque cavité de ventilation comprend une première partie de cavité prolongée dans la profondeur par une deuxième partie de cavité, cette deuxième partie de cavité se raccordant au fond de cavité. La profondeur du fond de cavité peut correspondre au minimum de matière après usure totale de la bande de roulement avant son renouvellement.

Dans la première partie de cavité située entre la surface de roulement et un niveau de profondeur intermédiaire situé entre 30 % et 70 % de la profondeur maximale de la cavité, l'angle de dépouille moyen de la paroi délimitant la cavité de ventilation est au moins égal à 20 degrés. Cet angle de dépouille est pris comme étant l'angle d'inclinaison des génératrices de la paroi délimitant la première partie de la cavité.

Dans la deuxième partie de cavité prolongeant dans la profondeur la première partie de cavité et jusqu'au fond de la cavité, l'angle de dépouille moyen de la paroi délimitant la deuxième partie de cavité de ventilation est au plus égal à 15 degrés. Cet angle de dépouille est pris comme étant l'angle d'inclinaison des génératrices de la paroi délimitant la deuxième partie de la cavité avec une direction perpendiculaire à la surface de roulement de la bande de roulement.

Par angle moyen, il faut comprendre que l'angle peut ne pas être constant selon la génératrice considérée mais que chaque génératrice doit faire un angle au moins égal ou au plus égal à la valeur limite selon la partie considérée (au moins égal à 20 degrés dans la première partie et au plus égal à 15 degrés dans la deuxième partie).

En outre, la surface maximale de section de la deuxième partie de cavité est au moins égale à 40% de la surface minimale de section de la première partie de cavité.

Les cavités de ventilation coupent les faces de contact des éléments de relief selon une forme en ellipse dont le grand axe est orienté transversalement.

De façon avantageuse, la longueur du grand axe AA après une usure prédéfinie est au plus égale à 1.25 fois la longueur du petit axe.

Lorsqu'il est choisi de réaliser des formes elliptiques à la fois pour la première partie de cavité et la deuxième partie de cavité, il est judicieux que les grands axes soient d'orientations différentes.

De façon avantageuse, l'écart entre l'angle de dépouille de la première partie de cavité et l'angle de dépouille de la deuxième partie est au moins égal à 15 degrés.

De façon avantageuse, il est formé au moins une partie intermédiaire formant une sorte de plateau séparant la première partie de la deuxième partie, ce plateau étant incliné avec un angle moyen égal ou proche de 90 degrés par rapport à une direction radiale. Par proche de 90 degrés, on entend ici au moins égal à 70 degrés.

De façon avantageuse, la largeur de la cavité de ventilation mesurée près du fond de la cavité est inférieure à 33% de la profondeur totale de la cavité à neuf. Cette largeur est mesurée à une distance du fond correspondant à 10% de la profondeur totale de la cavité à neuf.

Préférentiellement, les cavités de ventilation sont formées sur chaque partie de bord délimitant axialement la bande de roulement.

Préférentiellement, lorsque les bords de la bande de roulement comportent des blocs séparés par des rainures obliques ou transversales, les dimensions circonférentielles maximales des cavités de ventilation formées sur chacun de ces blocs sont comprises entre 30% et 60% des longueurs circonférentielles des blocs.

L'invention concerne également un pneu pourvu d'une bande de roulement telle que définie précédemment, ce pneu étant destiné à équiper un essieu avant d'un véhicule de génie civil destiné à porter de très lourdes charges.

De façon avantageuse, les points les plus à l'intérieur de la bande de roulement sur le fond des cavités de ventilation sont à une distance Hs de l'armature de sommet, cette distance étant non nulle et préférentiellement au moins égale à 10 % de la profondeur maximale des cavités de ventilation.

D'autres caractéristiques et avantages de l'invention ressortent de la description faite ci-après en référence au dessin annexé qui montre, à titre d'exemple non limitatif, plusieurs formes de réalisation de l'objet de l'invention.

### BREVE DESCRIPTION DES FIGURES

La figure 1 représente une vue partielle d'une bande de roulement selon l'invention, cette bande étant représentée à l'état neuf ;
La figure 2 montre une partie de la bande de roulement de la figure 1 en coupe dans un plan de coupe radial dont la trace est indiquée par la ligne II-II sur la figure 1;
La figure 3 montre une variante de cavité de ventilation selon l'invention ;
La figure 4 montre une variante de cavité de ventilation selon l'invention.

### DESCRIPTION DES FIGURES

Pour faciliter la lecture de la description des mêmes références sont employées pour des variantes différentes dès lors qu'une référence désigne un même élément structurel ou fonctionnel.

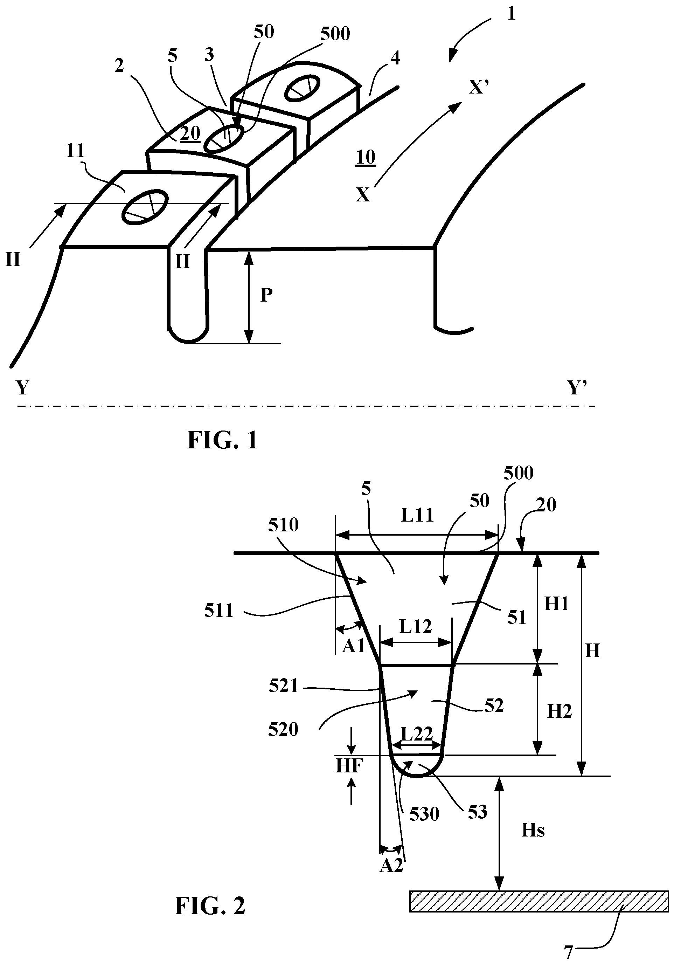

La figure 1 représente une vue partielle d'une sculpture d'une bande de roulement 1 selon l'invention, cette bande de roulement 1 étant représentée à l'état neuf, c'est-à-dire avant tout roulage. Cette bande de roulement 1 comprend une surface de roulement 10 destinée à venir en contact avec un sol lors du roulage. Cette bande est destinée à équiper un pneu pour véhicule roulant sur des sols qui peuvent être agressifs, ce véhicule portant de très lourdes charges. Cette bande est limitée axialement par des bords.

Sur cette figure 1, on distingue une partie de la bande de roulement formant un des bords de cette bande, ce bord étant constitué d'une pluralité de blocs 2 délimités par des rainures transversales 3 s'ouvrant dans une rainure 4 d'orientation circonférentielle. Ces rainures transversales 3 et la rainure circonférentielle 4 ont une même profondeur P correspondant sensiblement à l'épaisseur de matière à user en roulage. Dans le cas présent, la profondeur P des rainures est égale à 88 mm. Cette forte épaisseur (supérieure à 60 mm) est génératrice de niveaux thermiques pouvant être particulièrement pénalisants pour les matériaux constituant la bande de roulement.

Sur cette figure 1, la direction circonférentielle est matérialisée par une flèche XX' s'étendant dans la direction principale de la rainure circonférentielle 4. La direction matérialisée par la ligne YY' correspond à la direction transversale ou axiale et elle est parallèle à l'axe de rotation du pneu.

Chaque bloc 2 du bord comprend des faces latérales et une face de contact 20 destinée à venir en contact avec un sol pendant le roulage. Les intersections de la face de contact 20 avec les faces latérales forment dans le cas présent quatre arêtes utiles pour assurer la motricité et le freinage du pneu dans les différentes phases de roulage.

En outre, il est moulé dans chaque bloc 2 du bord une cavité de ventilation 5 ayant une profondeur totale H sensiblement égale à la profondeur P des rainures 3, 4 délimitant ce bloc, soit 88 mm. Chaque cavité de ventilation 5 s'ouvre sur la face de contact 20 du bloc 2 et est délimitée par une paroi latérale 50 et une paroi de fond 530, cette paroi de fond étant visible sur la figure 2 montrant en coupe une partie de la même bande de roulement. Chaque cavité 5 coupe à neuf la face de contact 20 selon une arête 500 ayant une forme géométrique fermée circulaire.

Dans cette configuration, le pneu destiné à équiper un véhicule portant de très lourdes charges est monté sur un essieu avant dudit véhicule.

La figure 2 montre la bande de roulement de la figure 1 dans un plan de coupe dont la trace est indiquée par la ligne II-II sur la figure 1. Sur cette coupe faite sur le bord de la bande, on distingue une cavité de ventilation 5 de profondeur totale H. Cette cavité de ventilation 5 est formée dans la profondeur de la bande de roulement par deux parties de cavité situées dans le prolongement l'une de l'autre. Une première partie de cavité 51 s'ouvre sur la surface de contact 20 selon un contour circulaire de diamètre L11, cette même première partie de cavité 51 se terminant à une profondeur H1 égale ici à 49 mm par un contour circulaire de diamètre L12 qui est inférieur au diamètre L11. Cette première partie de cavité 51 a une forme de tronc de cône dont la génératrice 511 fait un angle A1 avec une direction perpendiculaire à la surface de contact 20. Dans l'exemple présenté, cet angle A1 est égal à 30 degrés.

Cette première partie de cavité 51 se prolonge par une deuxième partie de cavité 52 également en forme de tronc de cône dont la génératrice 521 fait un angle A2 avec une même direction radiale perpendiculaire à la surface de roulement, cet angle A2 étant ici égal à 15 degrés. Cette deuxième partie de cavité 52 a une profondeur H2 égale à 30 mm.

Enfin, cette deuxième partie de cavité 52 se termine par un fond de cavité 53 ayant une profondeur HF égale dans le cas présent à 9 mm.

En outre, sur cette figure a été représentée de manière schématique une extrémité axiale de l'armature de sommet 7. De façon avantageuse, le fond des cavités est à une distance non nulle Hs de cette armature de sommet 7 afin de créer une quantité de matière suffisante pour protéger ladite armature tout en facilitant l'évacuation des calories générées près de cette extrémité d'armature.

Grâce aux dispositions selon l'invention, il a été possible de diminuer sensiblement la sensibilité aux agressions par des objets externes sur lesquels la bande de roulement peut rouler tout en abaissant le niveau thermique en fonctionnement et cela quel que soit l'état d'usure de la bande de roulement.

Dans une variante de réalisation non montrée, les cavités de ventilation ont sur la face de contact des éléments une géométrie elliptique dont le grand axe est orienté dans la direction circonférentielle sur le pneu.

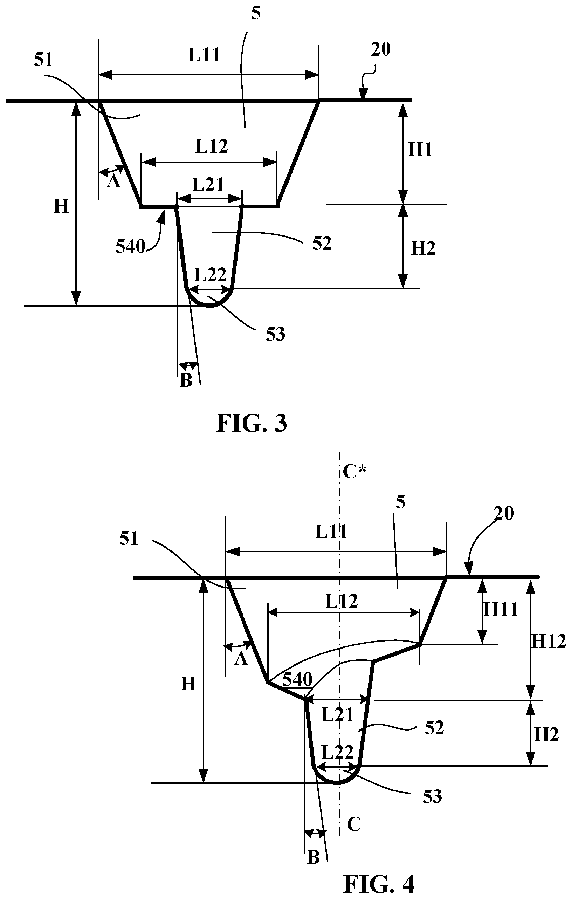

Dans une autre variante de réalisation montrée en coupe avec la figure 3, le raccordement entre la première partie de cavité 51 et la deuxième partie de cavité 52 de la cavité de ventilation 5 est réalisé par l'intermédiaire d'un plateau 540 parallèle à la face de contact 20 de l'élément de relief à neuf (l'angle entre ce plateau et une direction radiale est ici de 90 degrés). Grâce à plateau 540, il est possible de réduire de façon très sensible le diamètre maximal d'ouverture L21 de la deuxième partie de cavité 52. Ce diamètre L21 est inférieur au diamètre L12 du fond de la première partie de cavité 51, d'environ 50% dans le cas présenté. Ainsi la surface maximale de section de la deuxième partie de cavité est égale à 50% de la surface minimale de section de la première partie de cavité.

Cette disposition est favorable à la fois pour repousser les corps étrangers captés dans la première partie de cavité 51 et pour réaliser une bonne ventilation de la matière. L'angle B de dépouille de la deuxième partie de cavité 52 est inférieur à l'angle A de dépouille de la première partie de cavité 51, ces deux angles étant pris dans leurs domaines respectifs.

Dans une autre variante de réalisation montrée en coupe avec la figure 4, le raccordement entre la première partie de cavité 51 et la deuxième partie de cavité 52 est réalisé par une partie intermédiaire 540 comme c'est le cas dans la variante montrée avec la figure 3. La différence introduite dans cette variante concerne la partie intermédiaire qui comprend deux parties décalées dans la profondeur, ces deux parties décalées étant reliées entre elles par des parties de liaison. Chacune des parties décalées fait un angle de l'ordre de 15 degrés avec la surface de roulement à neuf. Ces parties décalées ne vont pas apparaitre en même temps sur la surface de roulement après une usure partielle : la première partie décalée apparait sur la surface de roulement après une usure correspondant à une profondeur égale à H11 tandis que la deuxième partie décalée n'apparait qu'après une usure correspondant à une profondeur H12 plus grande que la profondeur H11. Ceci est particulièrement favorable pour obtenir une usure régulière au voisinage de la cavité de ventilation tout au long de l'usage du pneu pourvu de cette bande et donc en particulier au passage de la première partie de cavité à la deuxième partie de cavité.

L'invention qui vient d'être décrite au moyen de ces exemples ne saurait être limitée à ceux-ci et diverses modifications peuvent y être apportées sans sortir du cadre défini par les revendications. Notamment les cavités de ventilation décrites peuvent être prévues dans la bande de roulement sur des parties autres que les bords.

## Revendications

1. Bande de roulement (1) pour pneu de véhicule de travaux de génie civil, ce véhicule étant destiné à porter de très lourdes charges, cette bande de roulement (1) ayant une surface de roulement (10) destinée à venir en contact avec un sol, cette bande étant limitée axialement par des parties de bord (11), cette bande de roulement ayant une épaisseur de matière à user au moins égale à 60 mm, cette épaisseur correspondant à l'épaisseur de matière mesurée entre la surface de roulement destinée à venir en contact avec un sol à neuf et une limite d'usure préalablement fixée, cette bande de roulement étant pourvue de découpures (3, 4) délimitant des parties de matière formant des éléments de relief (2), chaque élément de relief (2) comprenant une face de contact (20), l'ensemble des faces de contact de tous les éléments de relief formant la surface de roulement (10) de la bande de roulement, en outre sur une pluralité d'éléments de relief (2), il est formé au moins une cavité de ventilation (5) s'ouvrant à l'état neuf sur la face de contact (20) de ces éléments de relief, chaque cavité de ventilation (5) ayant une profondeur au moins égale à 70 % de l'épaisseur de matière à user de la bande de roulement, chaque cavité de ventilation (5) étant délimitée par une surface de paroi (50) se terminant par une surface de fond (530), la surface de paroi (50) d'une cavité de ventilation (5) coupe la surface de roulement (10) selon un contour d'arête fermé (500), la bande de roulement (1) selon l'invention est telle que chaque cavité de ventilation (5) comprend une première partie de cavité (51) prolongée dans la profondeur par une deuxième partie de cavité (52), cette deuxième partie de cavité (52) se raccordant à un fond de cavité (53), la bande de roulement (1) étant **caractérisée en ce que** dans la première partie de cavité (51) située entre la surface de roulement et un niveau de profondeur intermédiaire H1 situé entre 30 % et 70 % de la profondeur maximale H de la cavité de ventilation (5), l'angle de dépouille moyen A de la paroi délimitant la cavité de ventilation est au moins égal à 20 degrés, tandis que dans la deuxième partie de cavité (52) prolongeant dans la profondeur la première partie de cavité et jusqu'au fond (53) de la cavité, l'angle de dépouille moyen B de la paroi délimitant la cavité de ventilation est au plus égal à 15 degrés, et **en ce que** les cavités de ventilation (5) coupent les faces de contact (20) des éléments de relief (2) selon un contour ayant la forme d'une ellipse dont le grand axe est orienté transversalement.

2. Bande de roulement (1) selon la revendication 1 **caractérisée en ce que** la longueur du grand axe de l'ellipse après une usure prédéfinie est au plus égale à 1.25 fois la longueur de son petit axe.

3. Bande de roulement (1) selon la revendication 1 ou la revendication 2 **caractérisée en ce que** l'écart entre l'angle de dépouille A de la première partie de cavité (51) et l'angle de dépouille B de la deuxième partie de cavité (52) est au moins égal à 15 degrés.

4. Bande de roulement (1) selon l'une quelconque des revendications 1 à 3 **caractérisée en ce qu'**il est formé au moins une partie intermédiaire (540) formant une sorte de plateau séparant la première partie de cavité (51) de la deuxième partie de cavité (52), ce plateau étant incliné avec un angle moyen égal ou proche de 90 degrés par rapport à une direction perpendiculaire à la face de contact (20).

5. Bande de roulement (1) selon l'une quelconque des revendications 1 à 4 **caractérisée en ce que** la largeur L22 de la cavité de ventilation (5) mesurée près du fond de ladite cavité est inférieure à 33% de la profondeur totale H de la cavité de ventilation (5) à neuf, cette largeur L22 étant mesurée à une distance du fond correspondant à 10% de la profondeur totale H de la cavité de ventilation (5) à neuf.

6. Bande de roulement selon l'une quelconque des revendications 1 à 5 **caractérisée en ce que** les cavités de ventilation (5) sont formées sur chaque partie de bord délimitant axialement la bande de roulement.

7. Bande de roulement selon la revendication 6 **caractérisée en ce que** les bords de la bande de roulement comportent des blocs séparés par des rainures obliques ou transversales et **en ce que** les dimensions circonférentielles maximales des cavités de ventilation (5) formées sur chacun de ces blocs sont comprises entre 30% et 60% des longueurs circonférentielles de ces blocs.

8. Pneu pourvu d'une bande de roulement telle que définie à l'une quelconque des revendications 1 à 7, ce pneu étant destiné à équiper un essieu avant d'un véhicule de génie civil destiné à porter de très lourdes charges.

9. Pneu selon la revendication 8, ce pneu comprenant une armature de sommet radialement à l'intérieur de la bande de roulement, ce pneu étant **caractérisé en ce que** les points les plus à l'intérieur du fond des cavités de ventilation (5) sont à une distance non nulle de l'armature de sommet, cette distance étant au moins égale à 10 % de la profondeur maximale H des cavités de ventilation (5).

## Patentansprüche

1. Laufstreifen (1) für einen Reifen eines Baufahrzeugs, wobei dieses Fahrzeug dazu bestimmt ist, sehr schwere Lasten zu tragen, wobei dieser Laufstreifen (1) eine Lauffläche (10) aufweist, die dazu bestimmt ist, mit einem Boden in Kontakt zu kommen, wobei dieser Laufstreifen axial von Randteilen (11) begrenzt wird, wobei dieser Laufstreifen eine Dicke von abzunutzendem Material aufweist, die mindestens 60 mm beträgt, wobei diese Dicke der Materialdicke entspricht, die zwischen der Lauffläche, die dazu bestimmt ist, mit einem Boden in Kontakt zu kommen, im Neuzustand und einer im Voraus festgelegten Abnutzungsgrenze gemessen wird, wobei dieser Laufstreifen mit Ausschnitten (3, 4) versehen ist, die Materialteile begrenzen, welche Profilelemente (2) bilden, wobei jedes Profilelement (2) eine Kontaktfläche (20) umfasst, wobei die Gesamtheit der Kontaktflächen aller Profilelemente die Lauffläche (10) des Laufstreifens bildet, wobei außerdem an mehreren Profilelementen (2) mindestens ein Belüftungshohlraum (5) ausgebildet ist, der sich im Neuzustand an der Kontaktfläche (20) dieser Profilelemente öffnet, wobei jeder Belüftungshohlraum (5) eine Tiefe aufweist, die mindestens gleich 70 % der Dicke von abzunutzendem Material des Laufstreifens ist, wobei jeder Belüftungshohlraum (5) von einer Wandfläche (50) begrenzt wird, die von einer Bodenfläche (530) abgeschlossen wird, wobei die Wandfläche (50) eines Belüftungshohlraums (5) die Lauffläche (10) entlang einer geschlossenen Kantenkontur (500) schneidet,
wobei der Laufstreifen (1) gemäß der Erfindung so beschaffen ist, dass jeder Belüftungshohlraum (5) einen ersten Hohlraumteil (51) umfasst, der in der Tiefe durch einen zweiten Hohlraumteil (52) verlängert wird, wobei sich dieser zweite Hohlraumteil (52) an einen Hohlraumboden (53) anschließt, wobei der Laufstreifen (1) **dadurch gekennzeichnet ist, dass** in dem ersten Hohlraumteil (51), der sich zwischen der Lauffläche und einer Zwischentiefe H1 befindet,
die sich zwischen 30 % und 70 % der maximalen Tiefe H des Belüftungshohlraums (5) befindet, der mittlere Freiwinkel A der den Belüftungshohlraum begrenzenden Wand mindestens 20 Grad beträgt, während in dem zweiten Hohlraumteil (52), der den ersten Hohlraumteil in der Tiefe verlängert, und bis zum Boden (53) des Hohlraums der mittlere Freiwinkel B der den Belüftungshohlraum begrenzenden Wand höchstens 15 Grad beträgt, und dadurch, dass die Belüftungshohlräume (5) die Kontaktflächen (20) der Profilelemente (2) entlang einer Kontur schneiden, welche die Form einer Ellipse hat, deren Hauptachse quer ausgerichtet ist.

2. Laufstreifen (1) nach Anspruch 1, **dadurch gekennzeichnet, dass** die Länge der Hauptachse der Ellipse nach einer vordefinierten Abnutzung höchstens gleich dem 1,25-Fachen der Länge ihrer Nebenachse ist.

3. Laufstreifen (1) nach Anspruch 1 oder Anspruch 2, **dadurch gekennzeichnet, dass** der Unterschied zwischen dem Freiwinkel A des ersten Hohlraumteils (51) und dem Freiwinkel B des zweiten Hohlraumteils (52) mindestens 15 Grad beträgt.

4. Laufstreifen (1) nach einem der Ansprüche 1 bis 3, **dadurch gekennzeichnet, dass** wenigstens ein Zwischenteil (540) ausgebildet ist, der eine Art Plateau bildet, das den ersten Hohlraumteil (51) vom zweiten Hohlraumteil (52) trennt, wobei dieses Plateau in Bezug auf eine zur Kontaktfläche (20) senkrechte Richtung unter einem mittleren Winkel geneigt ist, der gleich oder annähernd gleich 90 Grad ist.

5. Laufstreifen (1) nach einem der Ansprüche 1 bis 4, **dadurch gekennzeichnet, dass** die Breite L22 des Belüftungshohlraums (5), nahe dem Boden dieses Hohlraums gemessen, kleiner als 33 % der Gesamttiefe H des Belüftungshohlraums (5) im Neuzustand ist, wobei diese Breite L22 in einem Abstand von dem Boden gemessen wird, der 10 % der Gesamttiefe H des Belüftungshohlraums (5) im Neuzustand entspricht.

6. Laufstreifen nach einem der Ansprüche 1 bis 5, **dadurch gekennzeichnet, dass** die Belüftungshohlräume (5) an jedem Randteil, der den Laufstreifen axial begrenzt, ausgebildet sind.

7. Laufstreifen nach Anspruch 6, **dadurch gekennzeichnet, dass** die Ränder des Laufstreifens Blöcke aufweisen, die durch Schräg- oder Querrillen getrennt sind, und dadurch, dass die maximalen Umfangsabmessungen der Belüftungshohlräume (5), die an jedem dieser Blöcke ausgebildet sind, zwischen 30 % und 60 % der Umfangslängen dieser Blöcke beträgt.

8. Reifen, welcher mit einem Laufstreifen versehen ist, wie in einem der Ansprüche 1 bis 7 definiert, wobei dieser Reifen dazu bestimmt ist, auf einer Vorderachse eines Baufahrzeugs montiert zu werden, das dazu bestimmt ist, sehr schwere Lasten zu tragen.

9. Reifen nach Anspruch 8, wobei dieser Reifen eine radial innerhalb des Laufstreifens befindliche Scheitelbewehrung umfasst, wobei dieser Reifen **dadurch gekennzeichnet ist, dass** sich die am weitesten innen befindlichen Punkte des Bodens der Belüftungshohlräume (5) in einem von null verschiedenen Abstand von der Scheitelbewehrung befinden, wobei dieser Abstand mindestens 10 % der maximalen Tiefe H der Belüftungshohlräume (5) beträgt.

## Claims

1. Tread (1) for a tyre of a civil engineering work vehicle, this vehicle being intended to carry very heavy loads, this tread (1) having a tread surface (10) intended to come into contact with the ground, this tread being axially bounded by edge parts (11), this tread having a thickness of material to be worn away at least equal to 60 mm, this thickness corresponding to the thickness of material measured between the tread surface intended to come into contact with the ground in the new state and a previously set wear limit, this tread being provided with cuts (3, 4) delimiting material parts forming raised elements (2), each raised element (2) comprising a contact face (20), all of the contact faces of all the raised elements forming the tread surface (10) of the tread, there also being formed, in a plurality of raised elements (2), at least one ventilation cavity (5) that opens in the new state onto the contact face (20) of these raised elements, each ventilation cavity (5) having a depth at least equal to 70% of the thickness of material of the tread to be worn away, each ventilation cavity (5) being delimited by a wall surface (50) ending at a bottom surface (530), the wall surface (50) of a ventilation cavity (5) intersecting the tread surface (10) along a closed corner edge contour (500),
the tread (1) according to the invention being such that each ventilation cavity (5) comprises a first cavity part (51) that is continued into the depth by a second cavity part (52), this second cavity part (52) connecting to a cavity bottom (53), the tread (1) being **characterized in that**, in the first cavity part (51) situated between the tread surface and an intermediate depth level HI situated at between 30% and 70% of the maximum depth H of the ventilation cavity (5), the mean relief angle A of the wall delimiting the ventilation cavity is at least equal to 20 degrees, while, in the second cavity part (52) that continues the first cavity part into the depth as far as the bottom (53) of the cavity, the mean relief angle B of the wall delimiting the ventilation cavity is at most equal to 15 degrees, and **in that** the ventilation cavities (5) intersect the contact faces (20) of the raised elements (2) along a contour having the shape of an ellipse, the major axis of which is oriented transversely.

2. Tread (1) according to Claim 1, **characterized in that** the length of the major axis of the ellipse after predefined wear is at most equal to 1.25 times the length of its minor axis.

3. Tread (1) according to Claim 1 or Claim 2, **characterized in that** the difference between the relief angle A of the first cavity part (51) and the relief angle B of the second cavity part (52) is at least equal to 15 degrees.

4. Tread(1) according to any one of Claims 1 to 3 **characterized in that** at least one intermediate part (540) forming a sort of plateau separating the first cavity part (51) from the second cavity part (52) is formed, this plateau being inclined at a mean angle equal or close to 90 degrees to a direction perpendicular to the contact face (20).

5. Tread (1) according to any one of Claims 1 to 4, **characterized in that** the width L22 of the ventilation cavity (5) measured close to the bottom of said cavity is less than 33% of the total depth H of the ventilation cavity (5) in the new state, this width L22 being measured at a distance from the bottom corresponding to 10% of the total depth H of the ventilation cavity (5) in the new state.

6. Tread according to any one of Claims 1 to 5, **characterized in that** the ventilation cavities (5) are formed on each edge part axially delimiting the tread.

7. Tread according to Claim 6, **characterized in that** the edges of the tread have blocks separated by oblique or transverse grooves, and **in that** the maximum circumferential dimensions of the ventilation cavities (5) formed in each of these blocks are between 30% and 60% of the circumferential lengths of these blocks.

8. Tyre provided with a tread as defined in any one of Claims 1 to 7, this tyre being intended to be fitted to a front axle of a civil engineering vehicle intended to carry very heavy loads.

9. Tyre according to Claim 8, this tyre comprising a crown reinforcement radially on the inside of the tread, this tyre being **characterized in that** the innermost points of the bottom of the ventilation cavities (5) are at a non-zero distance from the crown reinforcement, this distance being at least equal to 10% of the maximum depth H of the ventilation cavities (5).
